# EUROPEAN PATENT APPLICATION

(11) **EP 4 564 450 A1**
(43) Date of publication of application: **04.06.2025**
(21) Application number: 24202820.7
(22) Date of filing: 26.09.2024
(51) Int. Cl.: H01M 4/13, H01M 50/533, H01M 4/02, H01M 10/0525

(54) **ELECTRODE PLATE, BATTERY, AND VEHICLE**

(30) Priority: 30.11.2023 CN 202311641468
(71) Applicant: BYD Company Limited, Shenzhen, Guangdong 518118 (CN)
(72) Inventor: Deng, Xuanwei, Shenzhen, 518118 (CN); Ye, Yuzhen, Shenzhen, 518118 (CN); Chen, Na, Shenzhen, 518118 (CN); Li, Zekun, Shenzhen, 518118 (CN); Pan, Yi, Shenzhen, 518118 (CN)
(74) Representative: Mathys & Squire

(57) **Abstract**

An electrode plate, a battery, and a vehicle are provided. The electrode plate includes a current collector, an active material layer, and a tab. The active material layer covers the current collector. The tab is connected with the current collector. Y= (Z × m)/(n × 100000) is defined. Y is a comprehensive rate impact characteristic of the electrode plate. Z is a preset path distance by which an electron in the active material layer flows to the tab. The preset path distance is a larger value in a length direction or a width direction of the current collector. m is a surface density of the electrode plate. n is a quantity of tabs. Y satisfies: 0.14 ≤Y ≤ 3.2. Through the electrode plate, a problem of degrading in a rate capability of an electrode plate caused by over-designing can be resolved.

## Description

### FIELD

The present disclosure relates to the technical field of batteries, and more specifically, an electrode plate, a battery, and a vehicle.

### BACKGROUND

In recent years, batteries come into an increasingly close relationship with production and life of human beings, and play a core role in current vehicle electrification and energy storage intelligentization. A rate characteristic is a key factor for evaluating a battery. In an existing electrochemical system of batteries, to obtain a high-rate characteristic, a surface density or a compaction density of a battery needs to be reduced, or a multi-tab lead-out manner needs to be used, or a length of an electrode plate needs to be reduced. Based on the above, achieving a short diffusion and transfer path with low diffusion difficulty for ions and electrons in a battery is a general design idea and objective.

However, in the related art, to obtain batteries with a high-rate characteristic, most electrode plates are over-designed. For example, excessively reducing a surface density causes a reduction in an overall energy density of a battery. Alternatively, using the multi-tab lead-out manner and reducing a length of an electrode plate lead to an increase in structural members to be used in a battery pack, which leads to a reduction in mass and energy densities of the battery pack. The above is not conducive to improving a rate capability of a battery, and causes a waste of resources. Therefore, taking the foregoing three variables into comprehensive consideration in designing of an electrode plate to improve a rate capability of a battery becomes a key.

### SUMMARY

An objective of the present disclosure is to provide an electrode plate, a battery, and a vehicle, to resolve a problem of degrading in a rate capability of an electrode plate caused by over-designing.

To achieve the objective of the present disclosure, the present disclosure provides the following technical solutions.

According to a first aspect, the present disclosure provides an electrode plate, which includes a current collector, an active material layer, and a tab. The active material layer covers the current collector. The tab is connected with the current collector. Y = (Z × m)/(n × 100000) is defined. Yis a comprehensive rate impact characteristic of the electrode plate. Z is a preset path distance by which an electron in the active material layer flows to the tab. The preset path distance is a larger value in a length direction or a width direction of the current collector. m is a surface density of the electrode plate. n is a quantity of tab s. Y satisfies: 0.14 ≤ Y ≤ 3.2.

In an implementation, Y satisfies: 1 ≤ Y ≤ 2.

In an implementation, Z satisfies: 0 nm < Z ≤ 1000 nm.

In an implementation, m satisfies: 300 g/m2 ≤ m ≤ 600 g/m2.

In an implementation, n satisfies: 1 ≤ n ≤ 5.

In an implementation, the tab is connected with a width side of the current collector. A dimension of the width side of the current collector is less than or equal to a dimension of the length side. Z is a largest distance by which the electron in the active material layer flows to the tab in the length direction of the current collector.

In an implementation, the tab is connected with a length side of the current collector. A dimension of the width side of the current collector is less than a length side dimension. Z is a largest distance by which the electron in the active material layer flows to the tab in the length direction of the current collector.

In an implementation, multiple tabs are arranged. The multiple tabs are arranged at equal intervals. The dimension of the width side of the current collector is less than half a distance between two adjacent tabs. Z is half the distance between two adjacent tabs.

In an implementation, the multiple tabs include two first tabs and at least one second tab. The second tab is located between the two first tabs. When a distance between each of the first tabs and the width side of the current collector is greater than or equal to half a distance between the first tab and the second tab, Z is the distance between the first tab and the width side of the current collector.

According to a second aspect, the present disclosure further provides a battery. The battery includes a separator, a positive electrode plate, and a negative electrode plate. The positive electrode plate and/or the negative electrode plate is the electrode plate in the first aspect.

According to a third aspect, the present disclosure further provides a vehicle. The vehicle includes the battery in the second aspect.

In the present disclosure, to alleviate the phenomenon of degrading in a rate capability of an electrode plate caused by over-designing, a high-rate battery electrode plate is provided. The high-rate electrode plate may be comprehensively designed by defining, by a definitional formula, three variables including a surface density and an electron conduction path distance of the electrode plate as well as a manner of arrangement of a tab.

Y is defined in the range of 0.14 to 3.2, so that the electrode plate can achieve an excellent rate characteristic without over-designing that reduces an energy density of the battery. A value of Y being less than 0.14 indicates that electrons(or ions) in the electrode plate are diffused to an extreme extent. Therefore, the rate characteristic cannot be significantly optimized even if a diffusion path is further shortened. The value ofYbeing greater than 3.2 indicates that a diffusion path of the electrons (or ions) in the electrode plate is long, and multiple tabs are not provided for simultaneous lead-out, which suggests that most of electrons (or ions) in the active material layer cannot be effectively led out through the tabs, resulting in a poor rate capability of the electrode plate.

### BRIEF DESCRIPTION OF THE DRAWINGS

To describe technical solutions in implementations of the present disclosure or in the related art more clearly, drawings required for describing the implementations or the related art are briefly described below. Apparently, the drawings in the following description show only some of the implementations of the present disclosure, and a person of ordinary skill in the art may derive other drawings from these drawings without creative efforts.
FIG. 1 is a schematic structural sectional view of an electrode plate according to an implementation;
FIG. 2 is a schematic structural top view of the electrode plate with a tab being connected with a width side according to an implementation;
FIG. 3 is a schematic structural top view of the electrode plate with a single tab being connected with a length side according to an implementation;
FIG. 4 is a schematic structural top view of the electrode plate with a single tab being connected with the length side according to another implementation;
FIG. 5 is a schematic structural top view of the electrode plate with a single tab being connected with the length side according to still another implementation;
FIG. 6 is a schematic structural top view of the electrode plate with multiple tabs being connected with the length side according to an implementation; and
FIG. 7 is a schematic structural top view of the electrode plate with multiple tabs being connected with the length side according to another implementation.

In the drawings:
100-Electrode plate, 1-Current collector, 2-Active material layer, 3-Tab.

### DETAILED DESCRIPTION

Technical solutions in implementations of the present disclosure are clearly and completely described below with reference to drawings in the implementations of the present disclosure. Apparently, the described implementations are merely some rather than all of the implementations of the present disclosure. All other implementations obtained by a person of ordinary skill in the art based on the implementations of the present disclosure without creative efforts fall within the protection scope of the present disclosure.

It should be noted that, when an assembly is referred to as "being fixed to" another assembly, the assembly may be directly located on the another assembly, or an intermediate assembly may exist. When an assembly is considered to be "connected with" another assembly, the assembly may be directly connected with the another assembly, or an intermediate assembly may exist.

Unless otherwise defined, meanings of all technical and scientific terms used in this specification are the same as those usually understood by a person skilled in the art of the present disclosure. In the present disclosure, terms used in the specification are merely intended to describe objectives of the specific embodiments, and are not intended to limit the present disclosure. A term "and/or" used in the present disclosure includes any or all combinations of one or more related listed items.

Some implementations of the present disclosure are described below in detail with reference to the drawings. The following embodiments and features in the embodiments may be combined with each other in a case that no conflict occurs.

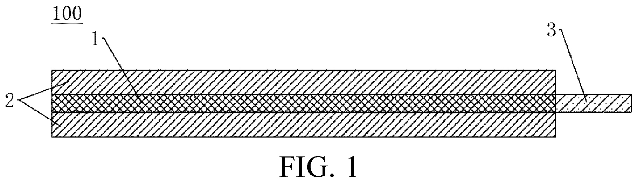

The present disclosure provides an electrode plate 100. Referring to FIG. 1, the electrode plate 100 is applied to a battery, and includes a current collector 1, an active material layer2, and a tab 3. The active material layer 2 covers the current collector 1. The tab 3 is connected with the current collector 1.

Optionally, the current collector 1 includes a width side and a length side. The width side is a side extending in a width direction, and the length side is a side extending in a length direction. The current collector 1 further includes a first surface and a second surface opposite to each other. The first surface and/or the second surface are configured to arrange the active material layer 2.

Optionally, the current collector 1 may be a foam metal mesh, a metal film, or the like, which specifically includes any of a copper foil and an aluminum foil.

Optionally, the current collector 1 may be in a shape of a rectangle, a square, an ellipse, or the like, which is not specifically limited.

Optionally, the active material layer 2 covers the first surface and/or the second surface of the current collector 1. Optionally, to ensure an energy density of the electrode plate 100, the active material layer may cover the first surface and/or the second surface as large as possible. Preferably, the active material layer completely covers the first surface and/or the second surface.

Optionally, the active material layer 2 may include a positive electrode active material, a binder, and a conductive agent. The binder includes one or more of polyvinylidene chloride, soluble polytetrafluoroethylene, butadiene styrene rubber, hydroxypropyl methyl cellulose, methylcellulose, carboxymethylcellulose, polyvinyl alcohol, an acrylonitrile copolymer, sodium alginate, chitosan, and a chitosan derivative. The conductive agent includes one or more of graphite, carbon black, acetylene black, graphene, carbon fiber, C60, and a carbon nanotube.

Optionally, a slurry for making the active material layer 2 further includes a solvent. The solvent may be one or more of N-methylpyrrolidone (NMP), dimethylformamide (DMF), diethylformamide (DEF), water, and alcohols. Certainly, an amount of the solvent in the slurry is not specifically limited, as long as the amount of the solvent can meet fluidity and uniformity for application of the slurry.

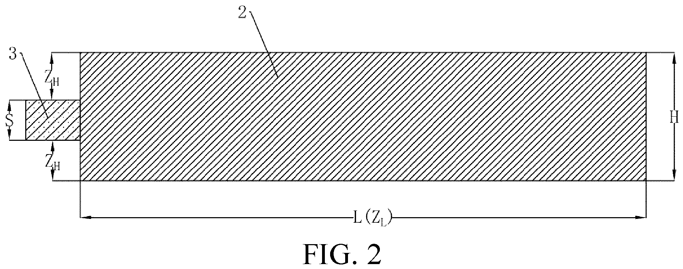

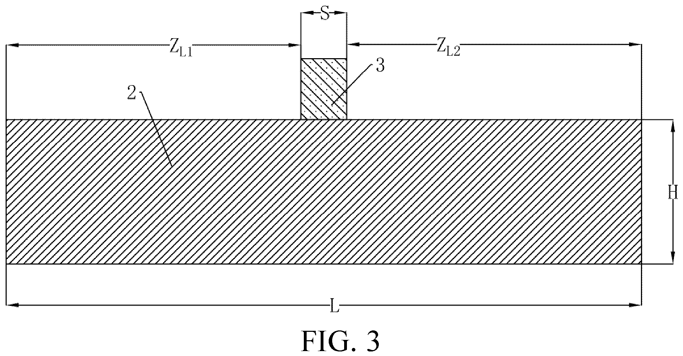

Optionally, as shown in FIG. 2 and FIG. 3, the tab 3 is connected with the current collector 1. Specifically, the tab may be connected with the width side (which is marked by H in the figure) and/or the length side (which is marked by L in the figure) of the current collector 1.

Optionally, the tab 3 and the current collector 1 may be separately formed, and then connected together by bonding or the like. Certainly, in another implementation, the tab 3 and the current collector 1 may be a single-piece structure. The tab 3 is a structure formed by cutting a copper foil or an aluminum foil.

Optionally, the electrode plate 100 provided in the present disclosure may be applied to a stacked battery or a wound battery. Therefore, specific dimensions of the length side and the width side described above are not limited, and the dimension of the length side may be greater than that of the width side, or the dimension of the width side may be greater than that of the length side.

In an implementation, the electrode plate 100 has the following definition: Y = (Z × m)/(n × 100000). Y is a comprehensive rate impact characteristic of the electrode plate 100. Z is a preset path distance by which an electron in the active material layer 2 flows to the tab 3. The preset path distance is a larger value in the length direction or the width direction of the current collector 1. m is a surface density of the electrode plate 100. n is a quantity of tabs 3. Y satisfies: 0.14 ≤ Y ≤ 3.2.

Specifically, the comprehensive rate impact characteristic Y of the electrode plate 100 is comprehensively defined by three variables including an electron conduction path distance of the electrode plate 100, a surface density of the electrode plate 100, and a manner of arrangement of the tab 3. The three variables have impact on a rate capability of the electrode plate 100.

Z is the preset path distance by which the electron in the active material layer 2 flows to the tab 3. The preset path distance is a larger value in the length direction or the width direction of the current collector 1. It should be noted that, as shown in FIG. 2 and FIG. 3, in a case that the current collector 1 is in the shape of a rectangle, the tab 3 may be connected with the width side or the length side of the current collector 1. The width side is the side in the width direction of the current collector 1, and the length side is the side in the length direction of the current collector 1.

In this case, a movement direction of the electron in the active material layer 2 may include two cases, namely, moving to the tab 3 along the width side (that is, the width direction) and moving to the tab 3 along the length side (that is, the length direction). A distance by which the electron moves to the tab 3 along the width side may be Z_{H}. A distance by which the electron moves to the tab 3 along the length side may be Z_{L}. As shown in FIG. 2, when the tab 3 is connected with the width side, Z_{H} is actually a distance by which an electron in the active material layer 2 at the length side of the current collector 1 moves to the tab 3, and Z_{L} is actually a distance by which an electron in the active material layer 2 at the width side of the current collector 1 moves to the tab 3. Therefore, Z in the foregoing definitional formula is actually a larger one of Z_{L} and Z_{H}. As shown in FIG. 2, in the electrode plate 100, Z in the definitional formula is actually Z_{L}.

m is a surface density of the electrode plate 100. Optionally, m is a surface density of both surfaces of the electrode plate 100.

n is the quantity of the tabs 3. Optionally, the quantity of the tabs 3 needs to be related to a dimension of the electrode plate 100. A wound battery is used an example. When a length of the current collector 1 is greater than a width, multiple tabs 3 may be arranged on the length side of the current collector 1 in sequence at intervals, to meet a demand of the spiral battery.

Y is defined in the range of 0.14 to 3.2, so that the electrode plate 100 can achieve an excellent rate characteristic without over-designing that reduces an energy density of the battery. A value of Y being less than 0.14 indicates that electrons (or ions) in the electrode plate 100 are diffused to an extreme extent. Therefore, the rate characteristic cannot be significantly optimized even if a diffusion path is further shortened. The value ofYbeing greater than 3.2 indicates that a diffusion path of the electrons (or ions) in the electrode plate 100 is long, and multiple tabs 3 are not provided for simultaneous lead-out, which suggests that most of electrons (or ions) in the active material layer 2 cannot be effectively led out through the tabs 3, resulting in a poor rate capability of the electrode plate 100.

Optionally, Y may further satisfy a range of 1 ≤ Y ≤ 2.

In the present disclosure, to alleviate the phenomenon of poor optimization in a rate capability of the electrode plate 100 caused by over-designing, a high-rate battery electrode plate is provided. The high-rate electrode plate 100 may be comprehensively designed by defining, by a definitional formula, three variables including a surface density and an electron conduction path distance of the electrode plate 100 as well as and a manner of arrangement of the tab 3.

In an implementation, Z satisfies: 0 nm < Z ≤ 1000 nm. Specifically, a value of Z may be 100 mm, 200 mm, 300 mm, 400 mm, 500 mm, 600 mm, 700 mm, 800 mm, 900 mm, or 1000 mm.

Optionally, Z satisfies: 0 nm < Z ≤ 900 nm, or 100 nm ≤ Z ≤ 1000 nm, or 0 nm < Z ≤ 800 nm, or 200 nm ≤ Z ≤ 800 nm, or 0 nm < Z ≤ 700 nm, or 0 nm < Z ≤ 600 nm, or 300 nm ≤ Z ≤ 700 nm. Optionally, Z satisfies: 0 nm < Z ≤ 700 nm.

Setting the largest distance Z by which the electron in the active material layer flows to the tab 3 to the foregoing range is actually intended to ensure a proper movement distance of the electron, so as to avoid an excessively large or small movement distance. In this way, Z may be used to define the other two parameters in combination with the foregoing definitional formula. When the movement distance of the electron is excessively small, the value of Y is excessively small. In this case, the rate capability of the electrode plate 100 cannot be improved by optimization. If the foregoing value of Y needs to be satisfied, a compaction density of the electrode plate 100 is excessively high, or the quantity of the tabs 3 is excessively large and the tabs are excessively dense. As a result, design difficulty of the electrode plate 100 increases, and production difficulty increases, which is not conducive to industrial production. When the movement distance of the electron is excessively large, the value of Y is excessively large. In this case, the electrode plate 100 has a poor rate capability. If the value ofYneeds to be satisfied, the compaction density of the electrode plate 100 is excessively low, or the quantity of the tabs 3 is excessively and the tabs are excessively sparse, which is neither conducive to improving the energy density of the battery nor conducive to realizing a function fast charging/discharging function.

Further, setting Z to the foregoing range further facilitates dimension designing of the current collector 1. It may be understood that an actual value of Z does not exceed the dimension of the length side or the dimension of the width side. In other words, in any electrode plate 100, a maximum value of Z may be the dimension of the length side or the dimension of the width side. When the value of Z is excessively small (in other words, when the movement distance of the electron is excessively small), the electrode plate 100 is excessively narrow. When the value of Z is excessively large (in other words, when the movement distance of the electrons is excessively large), the electrode plate 100 is excessively wide. The aboveis not conducive to actual production and use of the electrode plate 100.

In an implementation, m satisfies: 300 g/m² ≤ m ≤ 600 g/m² Specifically, a value of m may be 300 g/m², 350 g/m², 400 g/m², 450 g/m², 500 g/m², 550 g/m², or 600 g/m².

Optionally, m satisfies: 300 g/m² ≤ m ≤ 550 g/m², or 350 g/m² ≤ m ≤ 600 g/m², or 350 g/m² ≤ m ≤ 550 g/m², or 300 g/m² ≤ m ≤ 500 g/m², or 400 g/m² ≤ m ≤ 500 g/m².

The surface density m of the electrode plate 100 is set to the foregoing range, so that m may be used to define the other two parameters in combination with the foregoing definitional formula. When the surface density of the electrode plate 100 is excessively small, the value of Y is excessively small. In this case, the rate capability of the electrode plate 100 cannot be improved by optimization. If the foregoing value ofYneeds to be satisfied, the quantity of the tabs 3 is excessively small or the movement distance of the electrons is excessively large, which is not conducive to improving the rate capability and results in an excessively low overall energy density of the battery. When the surface density of the electrode plate 100 is excessively large, the value of Y is excessively large. In this case, the electrode plate 100 has a poor rate capability. If the foregoing value of Y needs to be satisfied, the quantity of the tabs 3 is excessively small or the movement distance of the electrons is excessively small, which increases difficulty of a manufacturing process.

In an implementation, when the electrode plate 100 is a positive electrode plate, the compaction density of the electrode plate 100 is in a range of 2.2 g/cm³ to 3.6 g/cm³. Specifically, the compaction density may be 2.2g/cm³, 2.3g/cm³, 2.4g/cm³, 2.5g/cm³, 2.6g/cm³, 2.7g/cm³, 2.8g/cm³, 2.9g/cm³, 3.0g/cm³, 3.1g/cm³, 3.2g/cm³, 3.2g/cm³, 3.3g/cm³, 3.4g/cm³, 3.5g/cm³, 3.6g/cm³.

Optionally, the compaction density is in a range of 2.2 g/cm³ to 3.2 g/cm³, or in a range of 2.4 g/cm³ to 3.6 g/cm³, or in a range of 2.2g/cm³ to 3.0 g/cm³, or in a range of 2.5 g/cm³ to 3.5 g/cm³, or in a range of 2.5 g/cm³ to 3.0 g/cm³.

In an implementation, when the electrode plate 100 is a negative electrode plate, the compaction density of the electrode plate 100 is in a range of 1.2 g/cm³ to 1.8 g/cm³. Specifically, the compaction density may be 1.2 g/cm³, 1.3 g/cm³, 1.4 g/cm³, 1.5 g/cm³, 1.6 g/cm³, 1.7 g/cm³, or 1.8 g/cm³.

It may be understood that the compaction density of the electrode plate 100 is related to the surface density m of the electrode plate 100. Therefore, ensuring the compaction density of the electrode plate 100 to be in the foregoing rangecan further ensure the surface density m of the electrode plate 100 to be in a proper range.

In an implementation, n satisfies: 1 ≤ n ≤ 5. Specifically, a value of n may be 1, 2, 3, 4, or 5. Optionally, n satisfies: 1 ≤ n≤ 4, or1 ≤ n ≤ 3, or 2 ≤ n ≤ 5, or 2 ≤ n ≤ 4, or 3 ≤ n ≤ 5.

The quantity n of the tabs 3 is set to the foregoing range, so that n may be used to define the other two parameters in combination with the foregoing definitional formula. When the quantity n of the tabs 3 is excessively small, the value of Y is excessively large. In this case, the electrode plate 100 has a poor rate capability. If the foregoing value of Y needs to be satisfied, the movement distance of the electrons needsto be correspondingly reduced, or the surface density of the electrode plate 100 needs to be reduced, which is not conducive to improving the rate capability thereof and results in an excessively low overall energy density of the battery. When the quantity n of the tabs 3 is excessively large, the value ofYis excessively small, and the electrode plate 100 adopts excessive tabs 3, which results in an increase in additional structural members, and results in a waste of resources. If the foregoing value of Y needs to be satisfied, the movement distance of the electrons needs to be correspondingly increased, or the surface density of the electrode plate 100 needs to be increased, which increases the difficulty of the manufacturing process.

In an implementation, the tab 3 is connected with the width side of the current collector 1. The dimension of the width side of the current collector 1 is less than or equal to the dimension of the length side. The active material layer 2 is on the current collector 1. Z is the largest distance by which the electron in the active material layer flows to the tab 3 in the length direction of the current collector 1.

Specifically, as shown in FIG. 2, the tab 3 is connected with the width side of the current collector 1. In addition, the dimension of the width side of the current collector 1 is less than the dimension of the length side (H < L). Therefore, based on the foregoing implementations, Z_{H} < Z_{L}. Z is the largest distance by which the electron in the active material layer flows to the tab 3 in the length direction of the current collector 1, that is, Z_{L}.

Further, as shown in FIG. 2, the tab 3 is connected with the width side of the current collector 1. In addition, the dimension of the width side of the current collector 1 is equal to the dimension of the length side (H = L). Therefore, based on the foregoing implementations, Z_{H} < Z_{L}. Z is the largest distance by which the electron in the active material layer flows to the tab 3 in the length direction of the current collector 1, that is, Z_{L}.

Optionally, as shown in FIG. 2, when multiple tabs 3 are provided and are connected to the width side, the dimension of the width side of the current collector 1 is still less than the dimension of the length side (H < L). Therefore, compared to a single tab 3, Z_{H} is further reduced, and Z is still Z_{L}.

In an implementation, the tab 3 is connected with the length side of the current collector 1. The dimension of the width side of the current collector 1 is less than the dimension of the length side. The active material layer 2 is on the current collector 1. Z is the largest distance by which the electron in the active material layer flows to the tab 3 in the length direction of the current collector 1.

Specifically, as shown in FIG. 3, the tab 3 is connected to the length side of the current collector 1. In addition, the dimension of the width side of the current collector 1 is less than the dimension of the length side (H < L). Therefore, based on the foregoing implementations, the following cases occur on Z_{H} and Z_{L}. To be specific, Z_{H} < Z_{L}, Z_{H} = Z_{L}, and Z_{H} > Z_{L}.

For example, as shown in FIG. 3, L = Z_{L1} + Z_{L2} + S. It may be learned that S is a length of the tab 3, Z_{L1} is a distance by which an electron on a left side of the tab 3 moves, and Z_{L2} is a distance by which an electron on a right side moves. Therefore, when either Z_{L1} or Z_{L2} is greater than Z_{H} (that, Z > H in the definitional formula), Z is the largest distance (Z_{L1} or Z_{L2}) by which the electron in the active material layer flows to the tab 3 in the length direction of the current collector 1.

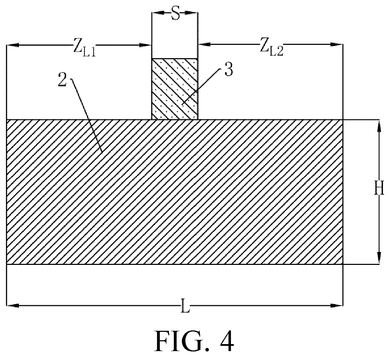

As shown in FIG. 4, when a larger one of Z_{L1} and Z_{L2} is equal to Z_{H} (that is, Z = H in the definitional formula), Z is the largest distance (Z_{L}) by which the electron in the active material layer flows to the tab 3 in the length direction of the current collector 1.

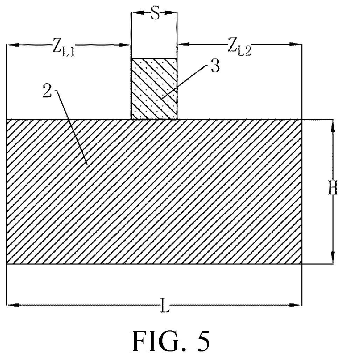

As shown in FIG. 5, when Z_{L1} and Z_{L2} are both less than Z_{H} (that is, Z < H in the definitional formula), Z is a largest distance (Z_{L}) by which the electron in the active material layer flows to the tab 3 in the width direction of the current collector 1. Certainly, in this implementation, since Z < H, a longest transmission path for the electron in the electrode plate 100 changes from Z to H, which indicates that excessive tabs 3 are arranged, resulting in over-designing of the electrode plate 100.

In an implementation, the tab 3 is connected with the length side of the current collector 1, multiple tabs 3 are arranged, and the multiple tabs 3 are arranged at equal intervals. The dimension of the width side of the current collector 1 is less than half a distance between two adjacent tabs 3. Z is half the distance between two adjacent tabs 3. In other words, the active material layer 2 is on the current collector 1, and the movement distance Z of the electron in the active material layer 2 is half the distance between two adjacent tabs 3.

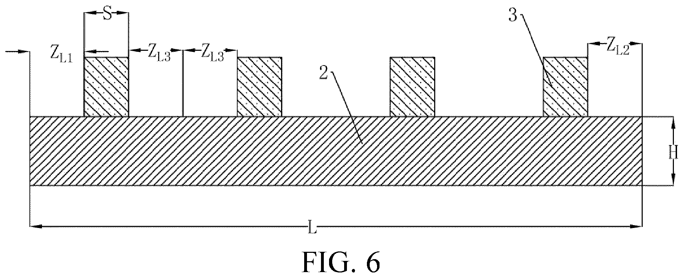

Specifically, as shown in FIG. 6, the quantity of the tabs 3 is n, and L = S × n + Z_{L1} + Z_{L2} + 2 × Z_{L3} × (n-1). Z_{L1} is a distance from a leftmost tab 3 to a left width side. Z_{L2} is a distance from a rightmost tab 3 to a right width side. Z_{L3} is half the distance between two adjacent tabs 3.

In a case that Z_{L1} = Z_{L2} = Z_{L3} and Z_{L3} is greater than or equal to Z_{H}, Z in the foregoing definitional formula is Z_{L3}, that is, the largest distance by which the electron in the active material layer flows to the tab 3 in the width direction of the current collector 1.

In a case that Z_{L1} and Z_{L2} are both less than Z_{L3} and Z_{L3} is greater than or equal to ZH, Z in the foregoing definitional formula is Z_{L3}, that is, the largest distance by which the electron in the active material layer flows to the tab 3 in the width direction of the current collector 1.

Certainly, in a case that Z_{L1} = Z_{L2} = Z_{L3} and Z_{L1} is less than Z_{H}, Z in the foregoing definitional formula is Z_{H}, which is half the distance between two adjacent tabs 3. Certainly, in this implementation, since Z < H, a longest transmission path for the electron in the electrode plate 100 changes from Z to H, which indicates that excessive tabs 3 are arranged, resulting in over-designing of the electrode plate 100.

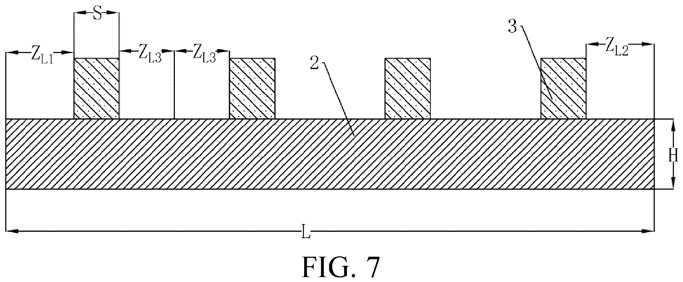

In an implementation, as shown in FIG. 6 and FIG. 7, the multiple tabs 3 include two first tabs and at least one second tab. The second tab is located between the two first tabs. When a distance between each of the first tabs and the width side of the current collector 1 is greater than or equal to half a distance between the first tab and the second tab, Z is the distance between the first tab and the width side of the current collector 1. In other words, the active material layer 2 is on the current collector 1, and the movement distance Z of the electron in the active material layer 2 is the distance between the first tab and the width side of the current collector 1.

Specifically, as shown in FIG. 7, the quantity of the tabs 3 is n. The two first tabs are respectively located on two sides away from the current collector 1 in the length direction, and the second tab is located between the two first tabs. For the first tab, in a case that Z_{L1} = Z_{L2} > Z_{L3} and Z_{L1} is greater than or equal to Z_{H}, Z in the foregoing definitional formula is Z_{L1}, that is, the distance between the first tab and the width side of the current collector 1. For the second tab, magnitudes of Z_{L3} and Z_{H} are still compared, as shown above. Details are not described.

Certainly, in a case that Z_{H} is a largest distance, reference may be made to the foregoing implementations. Details are not described herein.

In an implementation, the tab 3 is connected with the length side of the current collector 1, multiple tabs 3 are provided, and the multiple tabs 3 are arranged at equal intervals. In this case, magnitudes of Z_{L1}, Z_{L2}, Z_{L3}, and Z_{H} may be compared according to the foregoing implementations, to substitute a largest value thereof into the foregoing definitional formula for calculation.

In an embodiment, the present disclosure further provides a battery. The battery includes a separator, a positive electrode plate, and a negative electrode plate. The positive electrode plate and/or the negative electrode plate are electrode plates in the foregoing implementations. Specifically, the electrode plate provided in the present disclosure may be used as the positive electrode plate or the negative electrode plate.

The separator in the battery is located between a positive electrode and a negative electrode, and is configured to provide insulation and liquid retention between the positive electrode and the negative electrode of the battery. The separator is accommodated in a housing of the battery together with a movement. The separator is not specifically limited, and varioustypes of separators used in batteries, such as a PP separator or a PE separator may be used.

Optionally, the battery further includes an electrolyte. The electrolyte used in the battery is not limited, and various electrolytes used in ion batteries may be used. An injection coefficient of the electrolyte may be in a range of 2.0 g/Ah to 4.5 g/Ah.

Optionally, the battery may be a lithium-ion battery or a sodium-ion battery.

In the present disclosure, three variables including a surface density and an electron conduction path distance of the electrode plate in the battery as well as a manner of arrangement of a tab are comprehensively designed. The three variables in the battery affecting a rate characteristic are comprehensively defined as Y A value of Y may be regulated to achieve comprehensive control of optimization of the rate characteristic of the battery.

In an embodiment, the present disclosure further provides a vehicle. The vehicle includes the battery provided above.

The technical solutions of the present disclosure are described in detail below with reference to specific embodiments.

In the present disclosure, embodiments 1 to 11 and comparative examples 1 to 8 are provided. Atotal of 19 sets of batteries are provided, and the 19 sets of batteries are tested. The embodiments 1 to 10 adopt the positive electrode plate manufactured in the solution, and the embodiment 11 adopts the negative electrode plate manufactured in the solution. The comparative examples 1 to 7 adopt a positive electrode plate, and the comparative example 8 adopts a negative electrode plate.

A method for manufacturing the positive electrode plate in the embodiments and comparative examples includes the following.

Lithium iron phosphate (LFP) is used as a positive electrode active material. A carbon nanotube (CNT) and superp (SP) are used as conductive materials. Polyvinylidene fluoride (PVDF) is used as a binder material.

The positive electrode active material, a porous positive electrode pre-lithiated material, the CNT, the SP, the PVDF, and N-methylpyrrolidone (NMP) are formulated into a slurry in a ratio of 100: 12:0.3 :2.5 :55.

The slurry is uniformly coated on a conductive aluminum foil with a thickness of 15 µm, and is subject to baking and die cutting to obtain a final positive electrode plate. During the die cutting, tab positions are reserved based on requirements of the embodiments and the comparative examples. Next, die cutting needs to be performed on positive electrode plates having different lengths based on different requirements. A tab position or multiple tab positions in this test are not limited. The tab positions may be on a same side or on different sides.

A method for manufacturing the negative electrode plate in the embodiments and the comparative examples includes the following.

Graphite, sodium carboxymethyl cellulose (CMC), butadiene styrene rubber, and water are fully mixed in a ratio of 100:1.5:3:130 to obtain a uniform slurry.

The slurry is uniformly coated on a conductive copper foil having a thickness of 8 µm, and is dried and rolled at 110°C, and then slitting or die cutting is performed to finally obtain the negative electrode plate. Same as the positive electrode plate, corresponding tab positions and different lengths need to be reserved.

A method for manufacturing the battery in the embodiments and the comparative examples includes the following.

The foregoing positive electrode plate, negative electrode plate, and polypropylene separator are stacked in a Z-shape and assembled into a lithium-ion battery electrode core. Subsequently, hot-pressing is performed on the battery electrode, and the battery electrode is packaged into an aluminum-plastic film, and processes such as liquid injection, maturing, formation, aging, and capacity sorting are performed to obtain the battery.

A performance test of the battery in the embodiments and the comparative examples includes the following.

(1) Capacity: The battery was fully charged at a constant current of 0.33C at25°C to 3 .8 V, and was then discharged at a constant current of 0.33 C to 2.0V after a while. The operation is repeated 3 times. A3rd discharge capacity is denoted as C0. The third discharge capacity C0 is multiplied by an average discharge voltage to obtain an energy density in a unit of Wh/kg.

(2) 0°C/25°C 0.33C discharge capacity rate: The battery having the capacity C0 which was tested at 25°C in (1) was charged at0.33C0 at25°C to 3.8V, and was then discharged at 0.33C0 to 2.0V after a while to obtain Q1. The battery was charged at 0.33C0 at 25°C to 3.8V, was placed at 0°C for 4 hours, and was then discharged at 0.33 C0 to 2.0V to obtain Q2. Q2/Q1 is the 0°C/25°C 0.33C discharge capacity rate.

**Table 1. Coating ratios and battery parameters of the embodiments and the comparative examples**

| | Tab quantity n | Electrode plate length (mm) | Z (mm) | Electrode plate width H (mm) | Electrode plate surface density (mg/ m²) | Y | 0°C/25°C 0.33C discharge capacity rate (%) | Energy density (Wh/kg) |
|---|---|---|---|---|---|---|---|---|
| Embodiment 1 | 1 | 500 | 250 | 90 | 400 | 1.000 | 79.67 | 186.2 |
| Embodiment 2 | 1 | 960 | 480 | 90 | 400 | 1.920 | 78.14 | 183.7 |
| Embodiment 3 | 1 | 1200 | 600 | 90 | 500 | 3.000 | 77.13 | 177.3 |
| Embodiment 4 | 1 | 300 | 150 | 90 | 300 | 0.450 | 80.13 | 178.4 |
| Embodiment 5 | 1 | 600 | 600 | 90 | 400 | 2.400 | 78.71 | 184.1 |
| Embodiment 6 | 2 | 1200 | 300 | 90 | 560 | 0.840 | 79.21 | 176.3 |
| Embodiment 7 | 3 | 900 | 150 | 90 | 300 | 0.150 | 80.47 | 174.7 |
| Embodiment 8 | 3 | 900 | 200 | 200 | 400 | 0.267 | 78.6 | 173.7 |
| Embodiment 9 | 2 | 600 | 150 | 120 | 400 | 0.300 | 79.42 | 181.1 |
| Embodiment 10 | 4 | 1200 | 150 | 90 | 400 | 0.150 | 80.13 | 175.4 |
| Embodiment 11 | 1 | 500 | 250 | 90 | 400 | 1.000 | 78.93 | 184.2 |
| Comparative example 1 | 1 | 1800 | 900 | 90 | 400 | 3.600 | 70.49 | 177.1 |
| Comparative example 2 | 1 | 1200 | 600 | 90 | 560 | 3.360 | 71.35 | 172.3 |
| Comparative example 3 | 2 | 300 | 90 | 90 | 300 | 0.135 | 80.92 | 164.2 |
| Comparative example 4 | 3 | 300 | 90 | 90 | 300 | 0.090 | 80.17 | 153.1 |
| Comparative example 5 | 1 | 960 | 960 | 90 | 400 | 3.840 | 70.47 | 179.4 |
| Comparative example 6 | 6 | 900 | 90 | 90 | 500 | 0.075 | 80.96 | 150.2 |
| Comparative example 7 | 4 | 600 | 120 | 120 | 350 | 0.105 | 80.48 | 163.2 |
| Comparative example 8 | 1 | 1800 | 900 | 90 | 400 | 3.6000 | 70.02 | 176.3 |

It may be learned from results of the embodiment 1, the embodiment 2, and the comparative example 1 in Table 1 that, under the same surface density, the same tab quantity, and the same tab position, when a length of the positive electrode plate (that is, the largest movement distance Z of electrons) is increased, the value ofYis increased. When the value is increased to a specific limit, to be specific, when Y is greater than 3.2, a 0°C/25°C 0.33C discharge capacity rate is significantly reduced. This is because the length of the value of Z is a largest transmission distance of the electron of the positive electrode plate. Therefore, the increase in the largest distance causes a reduction in the rate characteristic thereof.

It may be learned from results of the embodiments and the comparative example 2 in Table 1 that, under the same Z, tab quantity, and tab position, an increase in the surface density also causes a reduction in the rate characteristic. This is because when a surface density of the positive electrode plate is increased, a length of a diffusion path of lithium ions thereof is increased, which causes a reduction in the rate characteristic thereof. Therefore, under the same Z and n, to achieve a proper rate characteristic, the surface density needs to have an upper limit.

It may be learned from results of the embodiment 6, the embodiment 10, and the comparative example 2 in Table 1 that, for the same positive electrode plate length and m, increasing n and reducing the value of Z thereof may also ensure the rate characteristic thereof.

It may be learned from results of the embodiment 4, the embodiment 3, and the comparative example 4 in Table 1 that, under the same positive electrode plate length and m, n needs to have an upper limit for the improvement of the rate capability. In the comparative example 3 and the comparative example 4, an increase in n causes a reduction in Z, and Z is less than H, so that the value of Y is less than 0.14. However, compared with the embodiment 4, no significant improvement exists in the rate characteristic, which indicates that when the tab quantity n reaches a specific value, that is, when Z is reduced to a specific value, the improvement in the rate characteristic significantly decreases, and large n improves a mass of lithium-free active materials in the battery, for example, improves a mass of a current collector and a cover plate lead-out mass, and therefore mass and energy densities. Moreover, when Z is less than H, a distance from a dressing point to a nearest tab changes from Z to H, which also indicates that excessive tabs are arranged.

It may be learned from results of the embodiment9 and the comparative example 7 in Table 1 that, under the same width H, Z varies with different tab quantities, and the increase in n does not bring significant improvement in the rate characteristic but brings a significant reduction in the energy density thereof.

It may be learned from results of the embodiment 5 and the comparative example 5 in Table 1 that, when the positive electrode plate length is the same as Z (that is, in a same tab edge lead-out manner), under a same surface density, a reduction in the positive electrode plate length causes a reduction in Z, thereby improving the rate characteristic.

It may be learned from results of the embodiment7 and the comparative example 6 in Table 1 that, although a small difference exists between the rate characteristics of the two, Y is less than 0.14, and Z is less than H, indicating that excessive tabs are designed. For a battery pack, inactive current collectors and cover plates are increased, but the rate characteristic does not significantly increase, and the energy density decreases. Therefore, the design is unworthy.

It may be learned from results of the embodiment 8, the comparative example 3, the comparative example 4, and the comparative example 6 in Table 1 that, when Z is less than H, the energy density thereof may not significantly decrease only when Y is greater than 0.14.

It may be learned from results of the embodiment 11 and the embodiment 8 in Table 1 that, the solutions provided in the present disclosure are further applicable to the negative electrode plate, and a battery with better performance may be obtained by adjusting the negative electrode plate to meet the formula provided in the present disclosure.

In the description of the embodiments of the present disclosure, it should be noted that orientation or position relationships indicated by terms such as "center", "up", "down", "left", "right", "vertical", "horizontal", "inside", and "outside" are based on orientation or position relationships shown in the drawings, and are merely used for ease and brevity of description of the present disclosure, rather than indicating or implying that the mentioned device or element needs to have a particular orientation orbe constructed and operated in a particular orientation. Therefore, such terms should not be construed as a limitation on the present disclosure.

The foregoing content disclosed above is merely preferred embodiments of the present disclosure, and certainly is not intended to limit the scope of the claims of the present disclosure. A person of ordinary skill in the art may understand all or some of the processes for implementing the foregoing embodiments, and equivalent changes made according to the claims of the present disclosure still fall within the scope covered by the present disclosure.

## Claims

1. An electrode plate, comprising:
a current collector;
an active material layer, the active material layer covering the current collector; and
a tab, the tab being connected with the current collector,
Y = (Z × m)/(n × 100000) being defined, wherein Y is a comprehensive rate impact characteristic of the electrode plate; Z is a preset path distance that an electron in the active material layer flows to the tab; the preset path distance is a larger value in a length direction or a width direction of the current collector; m is a surface density of the electrode plate; n is a quantity of tabs; and Y satisfies: 0.14 ≤ Y ≤ 3.2.

2. The electrode plate according to claim 1, wherein Y satisfies: 1 ≤ Y ≤ 2.

3. The electrode plate according to claim 1, wherein Z satisfies: 0 nm < Z ≤ 1000 nm.

4. The electrode plate according to claim 1, wherein m satisfies: 300 g/m² ≤ m ≤ 600 g/m².

5. The electrode plate according to claim 1, wherein n satisfies: 1 ≤ n ≤ 5.

6. The electrode plate according to claim 1, wherein the tab is connected with a width side of the current collector; a dimension of the width side of the current collector is less than or equal to a dimension of the length side; and Z is a largest distance that the electron in the active material layer flows to the tab in the length direction of the current collector.

7. The electrode plate according to claim 1, wherein the tab is connected with a length side of the current collector; a dimension of the width side of the current collector is less than a dimension of the length side; and Z is a largest distance that the electron in the active material layer flows to the tab in the length direction of the current collector.

8. The electrode plate according to claim 7, wherein a plurality of tabs are arranged; the plurality of tabs are arranged at equal intervals; the dimension of the width side of the current collector is less than half a distance between two adjacent tabs; and Z is half the distance between two adjacent tabs.

9. The electrode plate according to claim 8, wherein the plurality of tabs comprise two first tabs and at least one second tab; the second tab is located between the two first tabs; and when a distance between each of the first tabs and the width side of the current collector is greater than or equal to half a distance between the first tab and the second tab, Z is the distance between the first tab and the width side of the current collector.

10. A battery, comprising a separator, a positive electrode plate, and a negative electrode plate, wherein the positive electrode plate and/or the negative electrode plate is the electrode plate according to any of claims 1 to 9.

11. A vehicle, comprising the battery according to claim 10.
